## Europäisches Patentamt
## European Patent Office
## Office européen des brevets

(19)

(11) Numéro de publication: **0 196 997**
**A2**

(12)

# DEMANDE DE BREVET EUROPEEN

(21) Numéro de dépôt: **86810084.3**

(22) Date de dépôt: **17.02.86**

(51) Int. Cl.⁴: **B 23 H 1/02**

(30) Priorité: **05.03.85 CH 983/85**

(43) Date de publication de la demande:
**08.10.86 Bulletin 86/41**

(84) Etats contractants désignés:
**DE FR GB IT**

(71) Demandeur: **CHARMILLES TECHNOLOGIES SA**
**109, rue de Lyon**
**CH-1211 Genève(CH)**

(72) Inventeur: **Dauw, Dirk**
**3, Rue du Midi**
**CH-1196 Gland (Vaud)(CH)**

(74) Mandataire: **Ardin, Pierre**
**PIERRE ARDIN & CIE 22, rue du Mont-Blanc**
**CH-1211 Genève 1(CH)**

(54) **Procédé et dispositif pour l'usinage par électro-érosion.**

(57) Un générateur (1) fournit des impulsions entre une électrode-outil (2) et une pièce (3). Deux détecteurs (4, 5) sont reliés à l'électrode (2) et commandent une horloge (6) qui est remise à zéro par le générateur (1) et la ligne (7) à la fin de chaque impulsion. Les détecteurs (4) sont réglés pour réagir à deux tensions différentes, toutes deux comprises entre la tension à vide et la tension d'une décharge électrique. L'horloge (6) mesure donc le temps s'écoulant lors de l'établissement d'une décharge pour le passage de la tension de l'électrode (2) de l'une à l'autre des valeurs détectées. Ce temps est appliqué à un premier circuit de calcul (8), puis un second circuit (9) qui fournit au générateur (1) un signal pour le régler en fonction du résultat de la mesure qui correspond à un débit d'usinage.

FIG. 2

- 1 -

## PROCEDE ET DISPOSITIF
## POUR L'USINAGE PAR ELECTRO-EROSION

On connaît déjà des procédés pour contrôler l'usinage par étincelage érosif d'une pièce-électrode au moyen d'un outil-électrode entre lesquels on applique des impulsions de tension successives destinées à amorcer des étincelles et selon lesquels on mesure une grandeur caractéristique de la rapidité avec laquelle varie la tension et/ou le courant d'usinage lors de l'amorçage de l'étincelle.

D'autre part, l'usure de l'électrode est une grandeur caractéristique de l'électro-érosion et, jusqu'à présent, il n'était pas possible de la mesurer au cours de l'usinage.

L'invention a pour but de combler cette lacune. A cet effet, le procédé selon l'invention est caractérisé en ce qu'on produit un signal représentatif du volume de matière érodée sur l'électrode de polarité positive en utilisant une fonction de la grandeur caractéristique de la rapidité avec laquelle varie la tension et/ou le courant d'usinage au moment où s'établit une décharge par étincelle.

Le dessin annexé représente schématiquement et à titre d'exemple une forme d'exécution d'un dispositif permettant la mise en oeuvre du procédé objet de l'invention.

La figure 1 est un diagramme explicatif.

La figure 2 est un schéma de ce dispositif.

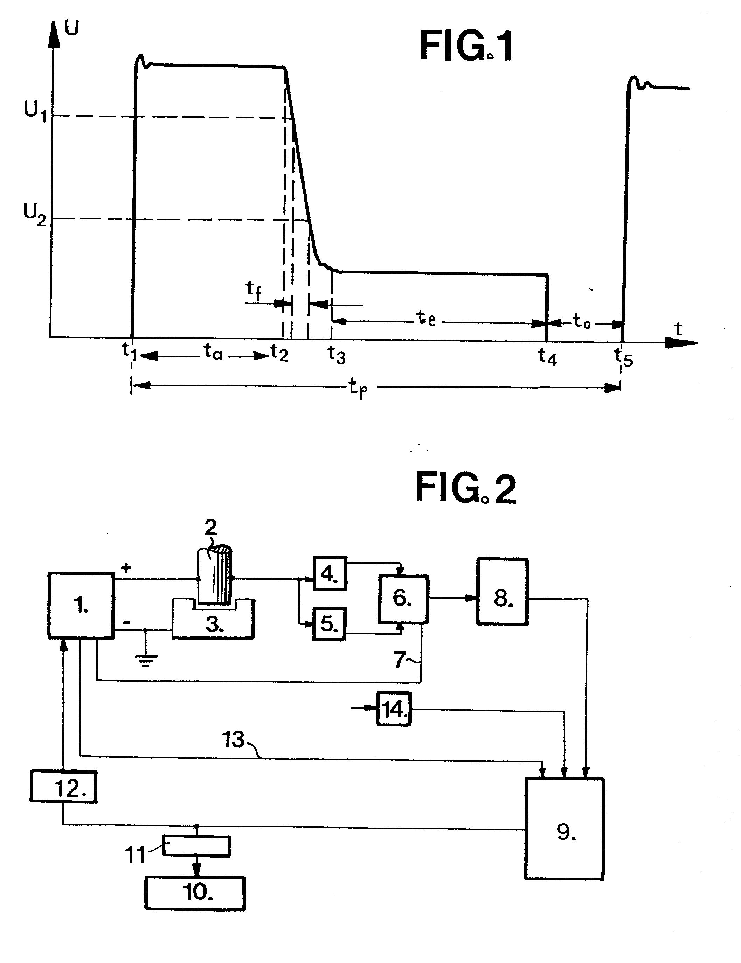

Le diagramme de la figure 1 montre l'allure de la tension d'usinage entre l'électrode-outil et l'électrode-pièce au cours d'une décharge. La tension appliquée au temps $t_1$ est la tension de maintien pendant un temps

d'attente $t_a$ jusqu'au temps $t_2$ où la décharge commence à s'amorcer. Le courant augmente progressivement tandis que la tension diminue jusqu'au temps $t_3$ où les conditions de décharge deviennent stables. Au temps $t_4$, l'impulsion est interrompue, ceci jusqu'au temps $t_5$ où débute l'impulsion suivante.

On a trouvé que la rapidité avec laquelle la tension diminue de $t_2$ à $t_3$ permet de déterminer le rendement d'étincelage de l'impulsion et donc d'élaborer un signal représentatif du volume de matière érodée sur l'électrode de polarité positive. Pour élaborer ce signal, on contrôle le moment où la tension instantanée est égale à $U_1$ et celui où elle est égale à $U_2$ et l'on mesure le temps $t_f$ que met la tension pour descendre de $U_1$ à $U_2$, ce qui donne la pente de la diminution de tension. Plus cette pente est grande, plus l'usure de l'électrode positive est grande.

Il y a lieu de relever que, dans l'impulsion illustrée à la figure 1, l'enlèvement de matière sur l'électrode positive s'effectue entre $t_2$ et $t_3$, principalement pendant le temps $t_f$. Par contre, l'enlèvement de matière sur l'électrode négative se produit pendant la décharge proprement dite, c'est-à-dire entre $t_3$ et $t_4$, cette durée étant normalement désignée par $t_e$.

Pour quantifier l'enlèvement de matière d'une électrode positive, on peut utiliser la formule :

$$\Delta q = e^{-t_f/k}$$

où      $\Delta q$ est la quantité de matière enlevée au cours d'une décharge;

$t_f$ est le temps écoulé entre le passage de la tension de $U_1$ à $U_2$ et

k est une constante qui dépend du couple de métaux de l'électrode-outil et de la pièce à usiner.

Une grandeur $U_R$ définissant l'usure relative entre les électrodes positive et négative peut être évaluée pour n décharges par la relation

$$U_R = K_R \frac{\sum_{1}^{n} e^{-t_f/k}}{\sum_{1}^{n} t_e}$$

dans laquelle $K_R$ est une constante dépendant du couple des métaux des électrodes positive et négative

$t_e$ est la durée de la décharge.

On peut aussi obtenir une grandeur $U_V$ définissant l'usure $V_E$ de l'électrode positive par la relation

$$U_V = K_V \frac{\sum_{1}^{n} e^{-t_f/k}}{\sum_{1}^{n} t_p}$$

Le dispositif représenté à la figure 2 comprend un générateur 1 fournissant des impulsions entre une électrode-outil 2 et une électrode-pièce 3 qui est à la masse. La tension de l'électrode 2 est appliquée à deux détecteurs 4 et 5 donnant un signal lorsque cette tension est égale à $U_1$ et respectivement $U_2$. Les signaux des détecteurs 4 et 5 sont appliqués à une horloge 6 qui est reliée au générateur 1 par une ligne 7 de mise à zéro, cette remise à zéro ayant lieu à la fin de chaque impulsion. La sortie de l'horloge 6 est appliquée à un circuit de calcul 8 qui donne la valeur $\Delta q$. Cette valeur est appliquée à un second circuit de calcul 9 qui fournit le signal de sortie $U_V$ qui est appliqué à un dispositif d'affichage 10 par l'intermédiaire d'un circuit de calibrage permettant de régler le dispositif 10 sur diverses valeurs, par exemple des $mm^3/_m$. Si l'on règle le circuit 9 pour qu'il fournisse la grandeur $U_R$, le circuit de calibrage 11 peut être réglé pour afficher l'usure relative, par exemple en pourcent (c'est-à-dire pour obtenir le pourcentage de l'usure de l'électrode positive par rapport à l'usure de l'électrode négative). Le signal de sortie du circuit 9 est appliqué à un circuit 12 de réglage des paramètres, ce circuit permettant de régler le générateur 1 en fonction du résultat désiré. A cet effet, le circuit 12 est réglé par des moyens non représentés pour fournir les signaux de réglage du générateur répondant au désir de l'opérateur. On peut par exemple souhaiter une usure minimum de l'électrode 2 par rapport à un enlèvement de matière déterminé de la pièce 3. On pourrait aussi fixer l'amplitude maximum du courant de décharge en fonction de l'état de la surface que l'on veut obtenir dans la pièce usinée. En fait, le circuit 12 peut être réalisé par un micro-processeur qui peut agir sur le générateur 1, par exemple pour déterminer l'amplitude du courant d'une décharge, la durée de cette décharge, la durée du temps $t_0$ séparant la fin d'une décharge et le début de l'application de la tension pour provoquer la décharge suivante, la fréquence des décharges, etc.

Il y a lieu de noter que le générateur 1 est relié au circuit de calcul 9 par une ligne 13 pour lui fournir la valeur des paramètres sur lesquels il est réglé, par exemple $t_e$, $t_p$ et $t_0$. De même, un circuit 14 permet d'envoyer au circuit de calcul 9 un signal donnant la constante $K_R$ correspondant aux métaux utilisés pour les électrodes positive et négative.

REVENDICATIONS

1.      Procédé pour contrôler l'usinage par étincelage érosif d'une pièce-électrode au moyen d'un outil-électrode entre lesquels on applique des impulsions de tension successives destinées à amorcer des étincelles et selon lequel on mesure une grandeur caractéristique de la rapidité avec laquelle varie la tension et/ou le courant d'usinage lors de l'amorçage de l'étincelle, **caractérisé** en ce qu'on produit un signal représentatif de volume de matière érodée sur l'électrode de polarité positive en utilisant une fonction de ladite grandeur.

2.      Procédé selon la revendication 1, **caractérisé** en ce qu'on utilise une fonction exponentielle de ladite grandeur.

3.      Procédé selon la revendication 1, **caractérisé** en ce qu'on étalonne ladite fonction en rapport avec des paramètres d'usinage et des couples de matériaux d'électrodes de manière à quantifier l'usure.

4.      Dispositif pour la mise en oeuvre du procédé selon la revendication 1, comportant un circuit générateur d'impulsions, un circuit de mesure de la rapidité avec laquelle varie la tension et/ou le courant d'usinage lors de l'amorçage de l'étincelle, **caractérisé** par un circuit de calcul fournissant ledit signal représentatif en utilisant la fonction de ladite grandeur.

5.      Dispositif selon la revendication 4, **caractérisé** par un circuit de mesure de temps d'érosion et par un circuit de calcul du quotient de ladite fonction par le temps d'érosion.

6.      Dispositif selon l'une des revendications 4 et 5, **caractérisé** par un circuit de réglage des paramètres de l'usinage en réponse à la mesure de l'usure.

0196997

FIG.1

FIG.2